# EUROPEAN PATENT SPECIFICATION

(11) **EP 3 726 384 B1**
(45) Date of publication and mention of the grant of the patent: **05.01.2022**
(21) Application number: 19170019.4
(22) Date of filing: 18.04.2019
(51) Int. Cl.: G06F 11/07, G06F 11/14, G06F 11/16, G06F 11/18, G06F 11/20

(54) **METHOD AND SYSTEM FOR PRESERVING CONSISTENCY OF STATES DURING FAIL-OPERATIONAL CONTEXT SWITCH**
VERFAHREN UND SYSTEM ZUR AUFRECHTERHALTUNG DER KONSISTENZ VON ZUSTÄNDEN WÄHREND EINER AUSFALLBETRIEBSSICHERE KONTEXTUMSCHALTUNG
PROCÉDÉ ET SYSTÈME PERMETTANT DE PRÉSERVER LA COHÉRENCE DES ÉTATS LORS D'UNE COMMUTATION À SÛRETÉ INTÉGRÉE DE CONTEXTE

(43) Date of publication of application: 21.10.2020
(73) Proprietor: Bayerische Motoren Werke Aktiengesellschaft, 80809 München (DE)
(72) Inventor: Oszwald, Florian, 80339 München (DE)

(56) References cited:
- WO-A1-01/46806
- US-A1- 2005 132 250
- US-A1- 2018 032 413
- US-B1- 8 443 230

## Description

The invention relates to a method and a system for preserving consistency of states during fail-operational handover and computer-readable medium for the same.

Autonomous Driving is one of the key E/E (electrical-electronic) architecture push factors in the automotive industry. Progression towards autonomous driving is described in the SAE levels of the according norm SAE J3016 of SAE International. This norm describes six levels extending from level zero to level five, where the latter contains driver less driving or fully automated driving.

In order for autonomous vehicles to operate safely where no human is required to take over in case of operation failure, the system driving the vehicle must be "fail-operational". The fail-operational requirement reflects the complex and varying environment the vehicle is operating in, and that merely shutting the vehicle off in case of failure (fail-safe in a narrow sense) is in many cases dangerous. Fail-operational can be defined as a system that is designed to be operational even in case of failure of a part of the system. Fail-operational can be used primarily in the context of safety-critical vehicle systems. The definition is however not limited to safety-critical systems, and may also be used in the context of less safety-critical systems, such as navigation systems or vehicle entertainment systems.

A fail-operational system may perform a hand over from a primary (failing) part, to a secondary (fail-operational) part. A fail-operational part may be fully functional. In this case, the vehicle is fully operational in case of a failure in the primary part but is sensitive to failure due to reduced redundancy.

In a fail-operational mode (operating on the fail-operational part), the system may also be operational to a lesser extent and/or with less functionality. For safety-critical parts, this should involve functionality which at least ensures the system can safely bring the vehicle to halt at a safe location. An idea behind the "simplex architecture" is that the fail-operational part should be less complex and/or have fewer parts or instruction routines with fewer lines, and therefore less likely to fail. This allows a combination of the functionality of a complex system with the robustness of a simple system.

Operation of a component in a vehicle may depend on communication with one or more peripheral components such as a CAN communication component. Fail-operational behaviour of such a component may be implemented using a primary component that communicates with the peripheral component, and a fallback component that takes over component operation in case of failure in the primary component.

Application US 2005/132250 A1 aims to disclose a system that including a network interface attached to a persistent memory unit. The persistent memory unit is configured to receive checkpoint data from a primary process, and to provide access to the checkpoint data for use in a backup process, which provides recovery capability in the event of a failure of the primary process. The network interface is configured to provide address translation information between virtual and physical addresses in the persistent memory unit.

The implementation of such a process may not operate correctly, or even fail, when the fail-operational part takes over, since the fail-operational part does not have access to the current states of the vehicle when it is initiated. One alternative to solve this might be to request states from sensors and/or other units of the vehicle. This is however time-consuming, and may compromise safety during the delay. Alternatively, states could be read from the failing part. This however, may not be reliable due to the low reliability of the failing component. Alternatively, external state storage, common to the primary and the fail-operational part, may be used. There is however a risk that a common external state storage does not have states consistent with messages sent to peripheral devices, since failure may occur in the time gap between the sending messages and the updating of states.

The deficiency outlined above is solved by the system of claim 1, the method of claim 10, and the computer-readable medium of claim 13.

In particular, the deficiency is solved by a system for updating one or more states relating to a message in a vehicle, the system comprising:
a first execution unit
an atom unit;
a buffer;
a state keeping unit; and
a peripheral unit,
wherein the atom unit is configured to carry out the steps:
a) receiving a first signal from the first execution unit, indicating a message and a state;
b) saving the message and the state in the buffer;
c) in response to correctly storing the message and the states, receiving a second signal from the first execution unit, requesting the initiation of sending the message;
d) sending the message to the peripheral unit;
e) sending a third signal to the state keeping unit to update the states in a state repository.

Advantages of the system include that the system ensures that the states of the state keeping unit is consistent with the message sent to the peripheral unit, and thus with the state of the vehicle, even if the first execution unit encounters a failure. The atom unit will send the message and update the states independent of fault in the first execution unit. The peripheral unit may be a CAN communication component, and the first execution unit may be an electronic control unit (ECU) controlling a function of the vehicle. The states may be an internal representation of the controlling function.

The vehicle may be operated, at least partially, based on the message sent from the first execution unit, via the atom unit, to the peripheral unit.

In one embodiment, the atom unit is operational independent of a failure, and/or an error, in the first execution unit.

Further advantages include that in the case of a fault or an error occurring in the first execution unit, once the atom unit has received the second signal to initiate the sending of messages and storing of states, the atom unit may continue operation and stores both the message and the state. An additional advantage is that the atom unit may be operational for a redundant component taking over after failure in the first execution unit.

Independent operation of the atom unit may be implemented by physically or logically separating the atom unit and the first execution unit. As an example, the atom unit and/or the first execution unit may be implemented as using separate logical gate arrays, on the same, or preferably different, hardware. The gate arrays may be realized using application-specific integrated circuit (ASIC) and/or Field-programmable gate arrays (FPGA). The first execution unit may also be implemented using a microprocessor and/or a CPU separated from the execution of the atom unit. The atom unit and the first execution unit may be connected via signals communicated via a bus linking the first execution unit and the atom unit.

A simple example of a system may include a first execution unit in the form of an ECU controlling the high beam of a vehicle via a CAN communication component (peripheral unit). The ECU may send a signal to an atom unit containing the CAN message to change the head light from low beam to high beam, and a corresponding change of internal states. The atom unit saves the message and the state in a buffer. On receiving a signal to initiate the change, the atom unit sends the signal to the CAN communication component, and update the state in a state keeping unit.

If the ECU encounters an internal error, consistent states may always be read in the state keeping unit. If the error occurs before the second signal to initiate the message is sent, a low beam will be read. If the error occurs after the second signal is sent, a high beam will be read, corresponding to the actual state of the vehicle.

The state keeping unit may be locked for reading, such as by the atom unit, during the updating of states, to prevent inconsistent states being read.

In one embodiment, the failure and error is identified by inconsistency in lockstep execution or voting logic of the first execution unit (104), and/or the failure and error gives rise to an interrupt, preferably aborting the first execution unit operation.

Advantages of such a system include error detection that is independent of software implementation and/or that will also detect certain hardware defects. By executing instructions in parallel and comparing results (internal memory/registers etc.), an error may be detected in case of inconsistent executions. It may be difficult and/or not reliable on a component level to determine which of two different execution results is the correct one. To address this, a context switch may be initiated to a fallback component and the operation of the first execution unit is aborted. Abortion may include disconnecting the first execution unit from the atom unit and/or the state keeping unit. Other means of determining an error in the first execution unit may also be used.

In one embodiment, the atom unit is further configured to carry out the step:
b2) sending a fourth signal to the first execution unit, indicating that the message and the state have successfully been saved in the buffer; and
wherein the second signal of step c) is sent by the first execution unit in response to receiving the fourth signal.

An advantage of such a step is that the message to initiate sending the message and storing of the states in step c) is not performed until the information is correctly stored by the atom unit. The first execution unit may take corrective measures if the information is not stored correctly, such as sending a signal erasing said information and/or re-sending the second signal with the message and the states.

In one embodiment, the atom unit is further configured to carry out the step:
b3) checking if the message and the states are correctly saved in the buffer, and
sending the fourth signal in response to checking the message and states are correctly saved in the buffer.

Said step possesses the advantage that a further check on the consistency of the system is performed, such as by reading the saved message and states from the storage and comparing it with the received signal to assess that the information is stored correctly. The atom unit may further send the read information back to the first execution unit so that the first execution unit may compare it with internal information before initiating the second signal of step c) to initiate the sending of the message and the storing of the states.

In one embodiment, the atom unit is further configured to carry out the step:
f) receiving a fifth signal from the peripheral unit, indicating that the message has been successfully processed;
wherein step e) is carried out when the message successfully has been processed.

This provides improved consistency in case there is an error in the peripheral unit, such as in a CAN communication component or during sending a message on the CAN communication network.

In one embodiment, the atom unit preferably comprises error correction means, such as voting logic.

The advantage of this feature is that a solution is provided in the scenario that the atom unit itself encounters an error during execution, potentially causing the consistency between the states and the message to be compromised. To improve robustness of the execution of the atom unit, the atom unit may rely on voting logic, such as by executing several parallel executions of the same code, preferably an uneven number of parallel operations, such as three, five, or more, and addressing inconsistency between executions by majority voting. The likelihood of two executions failing simultaneously decreases with the number of parallel executions, leading to improved robustness of the system.

In one embodiment, the system further comprises:
a decision unit; and
a second execution unit;
wherein the decision unit is configured to:
   in response to receiving a signal indicating a failure in the first execution unit, disconnect the first execution unit from the atom unit, and connect the second execution unit with the atom unit and/or the state keeping unit.

Such features provide a system with improved robustness that, in case of a failure in the first execution unit, may disconnect the first execution unit from the atom unit and continue vehicle operation with the second execution unit connected.

The vehicle may be operated, at least partially, based on the message sent from the second execution unit, via the atom unit, to the peripheral unit.

In one embodiment, after the second execution unit is connected with the atom unit and/or the state keeping unit, the second execution unit may read the states from the state keeping unit. The states may be read directly from the state keeping unit, or via the atom unit.

This has the advantage that the second execution unit may be initiated using a consistent state stored in the state keeping unit. This ensures correct operation of the second execution unit.

The first execution unit may further be disconnected from the atom unit to ensure that the failing component does not affect the operation of the vehicle, such as by sending messages to peripheral devices, by updating states in the state keeping unit.

The second execution unit may be connected to the atom unit in the same way as the first execution unit, such that it may perform the sending of messages and states to the atom unit and initiating the sending of the message to peripheral devices and states update via the atom unit. This ensures a consistent state between the messages and the states and allows handover from the second execution unit to the first execution unit to take place at any time.

After a handover (context switch) to the second execution unit, the first execution unit may initiate a recovery procedure in an effort to return to full operation. If recovery is successful, the decision unit may perform a second context switch back to the first execution unit.

Since the redundancy of the system may be limited when the second execution unit is operational, measures should be taken to limit the risk of failure in case the second execution unit also fails. The second execution unit may have error corrections measures, such as voting logic, and may implement a reduced set of functionality to limit the risk of failure.

In particular, the object is solved by a computer-implemented method for updating one or more states relating to a message in a vehicle, the method executing in an atom unit, the method comprising steps:
a) receiving a first signal from a first execution unit indicating a message and a state;
b) saving the message and the state in a buffer;
c) in response to correctly saving the message and the state, receiving a second signal from the first execution unit, initiating message sending;
d) sending the message to a peripheral unit;
e) sending a third signal to a state keeping unit, to update states in a state repository.

In one embodiment, the method further comprises the step:
b2) sending a fourth signal, indicating that the message and the state have successfully been saved; and
wherein the second signal of step c) is sent in response to receiving the fourth signal.

The above-stated method may further comprise features of the above-stated systems.

In one embodiment, the method further comprises the step:
f) receiving a fifth signal from the peripheral unit, indicating that the message has successfully been processed;
wherein step e) is carried out in response to the message being successfully processed.

In particular, the object of the present invention is achieved by a computer-readable medium comprising logic for a gate array, the logic, when implemented in the gate array, causes the gate array to carry out the steps of one or several of the above stated methods or the above stated systems, and/or comprising instructions which, when executed by a computer, cause the computer to carry out the steps of one or several of the above stated methods or the above stated systems.

The benefits and advantages of the methods and the mediums are equal or similar to the advantages of the above-mentioned system.

In the following, embodiments of the invention are described with respect to the figures, wherein
Fig. 1 shows a flowchart for updating states relating to a message
Fig. 2 shows steps of a method for updating states
Fig. 3 shows a fail-operations system in a vehicle
Fig. 4 shows an embodiment of state storage

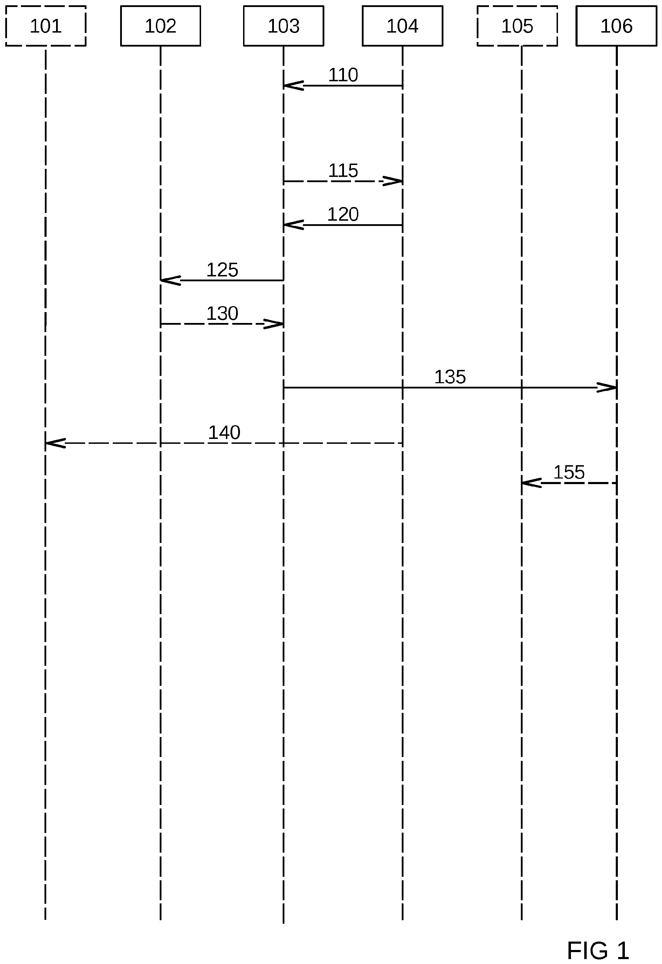

Fig. 1 shows a flowchart according to an embodiment of the inventions. The flowchart may contain a peripheral unit 102, an atom unit 103, a first execution unit 104, and a state keeper unit 106. The flowchart may optionally contain a decision unit 101 and a second execution unit 105.

The atom unit 103 is configured to receive a first signal 110 from the first execution unit, indicating a message and a state. The atom unit 103 is further save the message and the state in the buffer (not shown). The atom unit may receive a second signal 120 from the first execution unit 104, requesting the initiation of sending the message. The atom unit is, in response, send a signal 125 with the message to the peripheral unit 102 and send a third signal 135 to the state keeping unit 106 to update the states.

The atom unit 103 may further optionally send a fourth signal 115 to the first execution unit (104), after receiving the first signal 110, and after the message and the states have been stored, to indicate that the message and the states has successfully been saved in the buffer. The atom unit may read the written information in the buffer and compare it with information received with the first signal 110 to determine that the message and states are stored correctly. The second signal 120 may be sent by the first execution unit 104 in response to receiving the fourth signal 115.

The atom unit 103 may further optionally receive a fifth signal 130 from the peripheral unit 102, indicating that the message has been processed successfully (such as sent on a network, preferably a CAN communication network, and/or received by another processing unit which responded with an operation successfully completed message). Updating the states may take place on reception from the peripheral unit, that the message has successfully been processed.

The decision unit may optionally receive a sixth signal 140 indicating a failure in the first execution unit 104. In response, the decision unit may disconnect the first execution unit 104 from the atom unit 103, and connect the second execution unit 105 with the atom unit 103 and/or the state keeping unit 106.

The second execution unit 105 may optionally, be initiated by the decision unit, and during initiation, read states from the atom unit and/or the state keeping unit. Although depicted as read from the state keeping unit 106 directly, the second execution unit may also read the states via the atom unit 103.

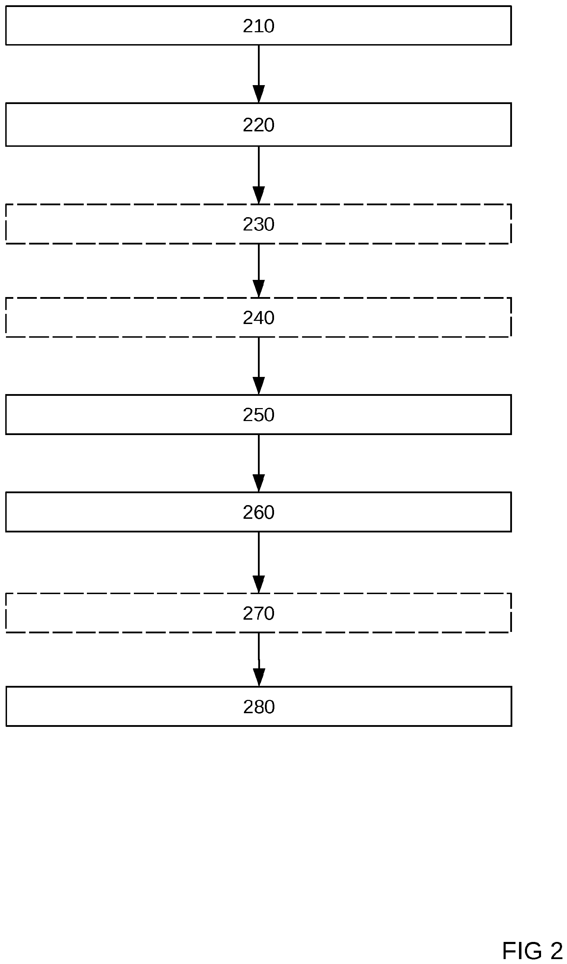

Fig. 2 shows a method according to an embodiment of the invention. The method contains the steps: receiving 210 a first signal indicating a message and a state. Saving 220 the message and the state. In response to saving the message and the state, receiving 250 a second signal initiating message sending and sending 260 the message to a peripheral unit. The method may also comprise sending 280 a third signal to update states in a state repository.

Optionally, the method may contain a step sending 230 a fourth signal to the first execution unit, indicating that the message and the state have successfully been saved in the buffer and a step checking 240 if the message and the states are correctly saved in the buffer and if so, sending the fourth signal in response to checking the message and states are correctly saved in the buffer.

Optionally, the method may contain a step 270 receiving a fifth signal from the peripheral unit, indicating that the message has successfully been processed, and sending the third signal to update states, which is carried out in response to the signal indicating that the message is being processed successfully.

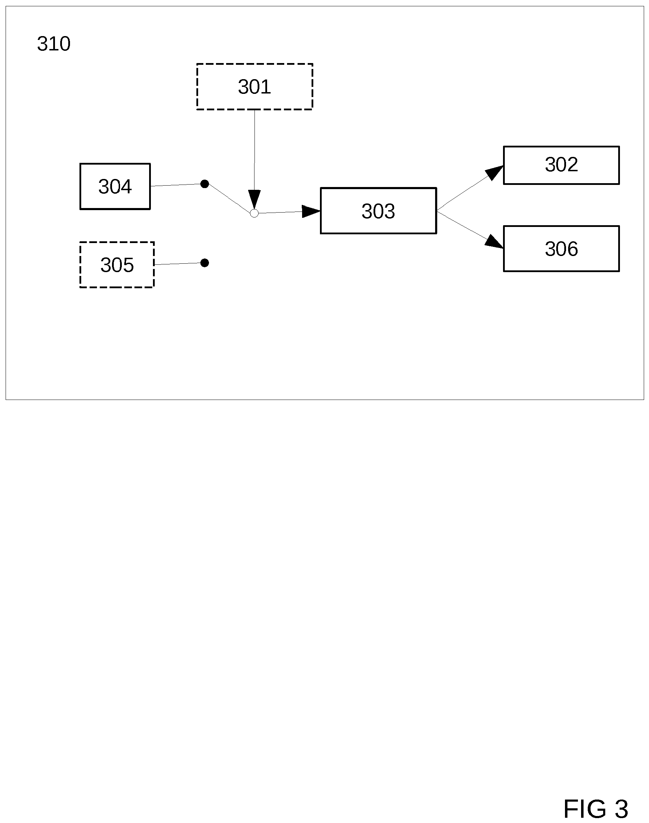

Fig. 3 shows a system 310 for updating one or more states relating to a message in a vehicle. The system comprises a peripheral unit 302, an atom unit 303, a first execution unit 304, and a state keeping unit 306. The system may also contain a second execution unit 305 and a decision unit 301.

The atom unit 303 receives a first signal 110 from the first execution unit 304, indicating a message and states. The atom unit 303 saves the message and the states. The atom unit 303 receives a second signal 120 from the first execution unit 304, requesting the initiation of sending the message and further sending the message to the peripheral unit 302 and updating the states in the state keeping unit 306.

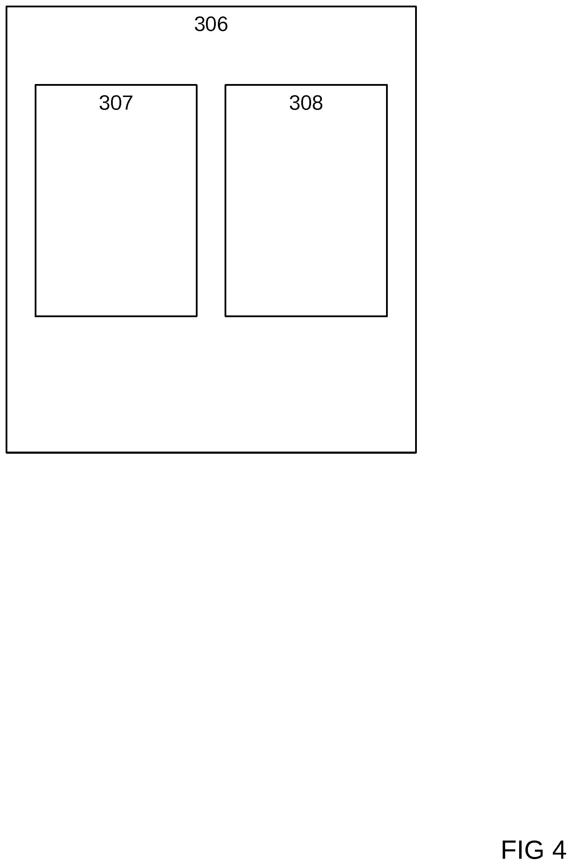

Fig. 4 shows an embodiment where a buffer is part of the state keeping unit 306.

In this embodiment, the state keeping unit 306 may comprise a first states storage 307, and a second states storage 308. One of the first and the second states storages may be identified as write states storage, and the other may be identified as read states storage. The read states storage may always be coherent with the messages sent to the peripheral unit. The atom unit may always write to the states storage identified as write state storage, such as when saving the message and the states in step b).

On receiving a second signal 120 to initiate the sending of the message and updating states, the identification of the write and the read states storage may switch, so that the one of the first and the second states storage that previously was the write states storage, becomes read states storage, and the other becomes write states storage. If a context switch takes place from the first execution unit 304 to the second execution unit 305, the second execution unit 305 may read from the one of the first states storage 307 and the second states storage 308 which is indicated as read state storage. This ensures, if later updates are made to the storage identified as write storage, the read storage will be consistent with the latest sent message.

After switching the read and write states storage, the new read storage may be copied to the new write storage to ensure that the new write storage is up to date. This may also be done after a context switch between primary and fail-operational components.

Logic may be implemented using gates, such as using a field-programmable gate array (FPGA) and executed simultaneously, or substantially simultaneously, such that the state storages switch substantially simultaneously with the message sent to the peripheral unit.

The one of the first state storage and the second state storage indicated as write state storage may in one embodiment also be read. This may be used to ensure that the states are correctly written to the write states storage before performing the read/write states storage switch. Other means to ensure integrity of states storage may be implemented depending on requirements, such as parity bits or duplicating each states storage.

### Reference numerals

- 101: decision unit
- 102: peripheral unit
- 103: atom unit
- 104: first execution unit
- 105: second execution unit
- 106: state keeping unit
- 110: first signal
- 115: fourth signal
- 120: second signal
- 125: sending message to peripheral unit
- 130: fifth signal
- 135: third signal
- 140: sixth signal
- 155: reading states from state keeping unit
- 210: receiving first signal
- 220: saving message and states
- 230: sending a fourth signal
- 240: checking saved message and states
- 250: receiving second signal
- 260: sending message to peripheral unit
- 270: receiving fifth signal
- 280: sending third signal
- 301: decision unit
- 302: peripheral unit
- 303: atom unit
- 304: first execution unit
- 305: second execution unit
- 306: state keeping unit
- 307: first states storage
- 308: second states storage

## Claims

1. A system for updating one or more states relating to a message in a vehicle, the system comprising:
a first execution unit (104)
an atom unit (103);
a buffer;
a state keeping unit (106); and
a peripheral unit (102),
wherein the atom unit (103) is configured to carry out the steps:
a) receiving a first signal (110) from the first execution unit (104), indicating the message and the states;
b) saving the message and the states in the buffer;
c) in response to correctly storing the message and the states, receiving a second signal (120) from the first execution unit (104), requesting the initiation of sending the message;
d) sending (125) the message to the peripheral unit (102); and
e) sending a third signal (135) to the state keeping unit (106) to update the states in a state repository.

2. The system of claim 1,
wherein the atom unit (103) is operational independent of a failure and/or an error in the first execution unit.

3. The system of claim 2,
wherein the failure and error is identified by inconsistency in lockstep execution or voting logic of the first execution unit (104), and/or the failure and error give rise to an interrupt, preferably aborting the first execution unit operation.

4. The system of any of the preceding claims,
wherein the atom unit (103) is further configured to carry out the step:
b2) sending a fourth signal (115) to the first execution unit (104), indicating that the message and the states have been successfully saved in the buffer; and
wherein the second signal (120) of step c) is sent by the first execution unit (104) in response to receiving the fourth signal (115).

5. The system of claim 4,
wherein the atom unit (103) is further configured to carry out the step:
b3) checking if the message and the states are correctly saved in the buffer, and
sending the fourth signal (115) in response to checking the message and states are correctly saved in the buffer.

6. The system of any of the preceding claims,
wherein the atom unit (103) is further configured to carry out the step:
f) receiving a fifth signal (130) from the peripheral unit (102), indicating that the message has been successfully processed; and
wherein step e) is carried out when the message has been successfully processed.

7. The system of any of the preceding claims,
wherein the atom unit (103) preferably comprises error correction means, such as voting logic.

8. The system of any of the preceding claims, further comprising:
a decision unit (101); and
a second execution unit (105);
wherein the decision unit is configured to:
in response to receiving a sixth signal (140) indicating a failure in the first execution unit (104), disconnect the first execution unit (104) from the atom unit (103), and connect the second execution unit (105) with the atom unit (103) and/or the state keeping unit (106).

9. The system of claim 8,
wherein, after the second execution unit is connected with the state keeping unit, the second execution unit reads (155) the states from the state keeping unit.

10. A computer-implemented method for updating one or more states relating to a message in a vehicle, said method executing in an atom unit (103), the method comprising steps:
a) receiving a first signal from a first execution unit (104) indicating a message and one or more states;
b) saving the message and the states in a buffer;
c) in response to correctly saving the message and the states, receiving a second signal from the first execution unit (104), initiating message sending;
d) sending the message to a peripheral unit; and
e) sending a third signal to a state keeping unit (106), to update states in a state repository.

11. The method of claim 10, further comprising the step:
b2) sending a fourth signal, indicating that the message and the states have been successfully saved in the buffer;
wherein the second signal of step c) is sent in response to receiving the fourth signal.

12. The method of claim 10 or claim 11, further comprising the step:
f) receiving a fifth signal from the peripheral unit, indicating that the message has been successfully processed;
wherein step e) is carried out in response to the message being successfully processed.

13. A computer-readable medium comprising logic for a gate array, the logic, when implemented in the gate array, causing the gate array to carry out the steps of any of the claims 10 to 12; and/or comprising instructions which, when executed by a computer, cause the computer to carry out the steps of the method of any of the claims 10 to 12.

## Patentansprüche

1. System zum Aktualisieren eines oder mehrerer Zustände bezüglich einer Meldung in einem Fahrzeug, wobei das System Folgendes umfasst:
eine erste Ausführungseinheit (104)
eine Atomeinheit (103);
einen Puffer;
eine Zustandserhaltungseinheit (106); und
eine Peripherieeinheit (102),
wobei die Atomeinheit (103) ausgebildet ist, die folgenden Schritte auszuführen:
a) Empfangen eines ersten Signals (110) von der ersten Ausführungseinheit (104), das die Meldung und die Zustände angibt;
b) Speichern der Meldung und der Zustände im Puffer;
c) als Antwort auf die korrekte Speicherung der Meldung und der Zustände, Empfangen eines zweiten Signals (120) von der ersten Ausführungseinheit (104), das die Initiierung des Sendens der Meldung anfordert;
d) Senden (125) der Meldung an die Peripherieeinheit (102); und
e) Senden eines dritten Signals (135) an die Zustandserhaltungseinheit (106), um die Zustände in einem Zustandsspeicher zu aktualisieren.

2. System nach Anspruch 1,
wobei die Atomeinheit (103) unabhängig von einem Ausfall und/oder einem Fehler in der ersten Ausführungseinheit betriebsfähig ist.

3. System nach Anspruch 2,
wobei der Ausfall und der Fehler durch eine Inkonsistenz in der Lockstep-Ausführungs- oder Abstimmungslogik der ersten Ausführungseinheit (104) identifiziert wird und/oder der Ausfall und der Fehler zu einer Unterbrechung führen, die vorzugsweise die Operation der ersten Ausführungseinheit abbricht.

4. System nach einem der vorhergehenden Ansprüche,
wobei die Atomeinheit (103) ferner ausgebildet ist, den folgenden Schritt auszuführen:
b2) Senden eines vierten Signals (115) an die erste Ausführungseinheit (104), das angibt, dass die Meldung und die Zustände erfolgreich im Puffer gespeichert worden sind; und
wobei das zweite Signal (120) von Schritt c) von der ersten Ausführungseinheit (104) als Antwort auf das Empfangen des vierten Signals (115) gesendet wird.

5. System nach Anspruch 4,
wobei die Atomeinheit (103) ferner ausgebildet ist, den folgenden Schritt auszuführen:
b3) Überprüfen, ob die Meldung und die Zustände korrekt im Puffer gespeichert sind, und
Senden des vierten Signals (115) als Antwort auf das Überprüfen, ob die Meldung und die Zustände korrekt im Puffer gespeichert sind.

6. System nach einem der vorhergehenden Ansprüche,
wobei die Atomeinheit (103) ferner ausgebildet ist, den folgenden Schritt auszuführen:
f) Empfangen eines fünften Signals (130) von der Peripherieeinheit (102), das angibt, dass die Meldung erfolgreich verarbeitet worden ist; und
wobei der Schritt e) ausgeführt wird, wenn die Meldung erfolgreich verarbeitet worden ist.

7. System nach einem der vorhergehenden Ansprüche,
wobei die Atomeinheit (103) vorzugsweise Fehlerkorrekturmittel, wie beispielsweise eine Abstimmungslogik, umfasst.

8. System nach einem der vorhergehenden Ansprüche, das ferner Folgendes umfasst:
eine Entscheidungseinheit (101); und
eine zweite Ausführungseinheit (105);
wobei die Entscheidungseinheit für Folgendes ausgebildet ist:
als Antwort auf das Empfangen eines sechsten Signals (140), das einen Ausfall in der ersten Ausführungseinheit (104) angibt, die erste Ausführungseinheit (104) von der Atomeinheit (103) zu trennen und die zweite Ausführungseinheit (105) mit der Atomeinheit (103) und/oder der Zustandserhaltungseinheit (106) zu verbinden.

9. System nach Anspruch 8,
wobei, nachdem die zweite Ausführungseinheit mit der Zustandserhaltungseinheit verbunden worden ist, die zweite Ausführungseinheit die Zustände aus der Zustandserhaltungseinheit liest (155).

10. Computerimplementiertes Verfahren zum Aktualisieren eines oder mehrerer Zustände, die sich auf eine Meldung in einem Fahrzeug beziehen, wobei das Verfahren in einer Atomeinheit (103) ausgeführt wird und die folgenden Schritte umfasst:
a) Empfangen eines ersten Signals von einer ersten Ausführungseinheit (104), das eine Meldung und einen oder mehrere Zustände angibt;
b) Speichern der Meldung und der Zustände in einem Puffer;
c) als Antwort auf die korrekte Speicherung der Meldung und der Zustände, Empfangen eines zweiten Signals von der ersten Ausführungseinheit (104), das das Senden der Meldung initiiert;
d) Senden der Meldung an eine Peripherieeinheit; und
e) Senden eines dritten Signals an eine Zustandserhaltungseinheit (106), um Zustände in einem Zustandsspeicher zu aktualisieren.

11. Verfahren nach Anspruch 10, das ferner den folgenden Schritt umfasst:
b2) Senden eines vierten Signals, das angibt, dass die Meldung und die Zustände erfolgreich im Puffer gespeichert worden sind;
wobei das zweite Signal von Schritt c) als Antwort auf das Empfangen des vierten Signals gesendet wird.

12. Verfahren nach Anspruch 10 oder Anspruch 11, das ferner den folgenden Schritt umfasst:
f) Empfangen eines fünften Signals von der Peripherieeinheit, das angibt, dass die Meldung erfolgreich verarbeitet worden ist;
wobei der Schritt e) als Antwort auf die erfolgreiche Verarbeitung der Meldung ausgeführt wird.

13. Computerlesbares Medium, das eine Logik für ein Gate-Array umfasst, wobei die Logik, wenn sie in dem Gate-Array implementiert ist, bewirkt, dass das Gate-Array die Schritte eines beliebigen der Ansprüche 10 bis 12 ausführt; und/oder Anweisungen umfasst, die, wenn sie von einem Computer ausgeführt werden, bewirken, dass der Computer die Schritte des Verfahrens nach einem der Ansprüche 10 bis 12 ausführt.

## Revendications

1. Système pour mettre à jour un ou plusieurs états relatifs à un message dans un véhicule, le système comprenant :
une première unité d'exécution (104) ;
une unité atomique (103) ;
un tampon ;
une unité de conservation d'états (106) ; et
une unité périphérique (102),
où l'unité atomique (103) est configurée pour exécuter les étapes suivantes :
a) recevoir un premier signal (110) de la première unité d'exécution (104), indiquant le message et les états ;
b) enregistrer le message et les états dans le tampon ;
c) en réponse au stockage correct du message et des états, recevoir un deuxième signal (120) en provenance de la première unité d'exécution (104), demandant le lancement de l'envoi du message ;
d) envoyer (125) le message à l'unité périphérique (102) ; et
e) envoyer un troisième signal (135) à l'unité de conservation d'états (106) pour mettre à jour les états dans un répertoire d'états.

2. Système selon la revendication 1,
dans lequel l'unité atomique (103) est opérationnelle indépendamment d'une défaillance et/ou d'une erreur dans la première unité d'exécution.

3. Système selon la revendication 2,
dans lequel la défaillance et l'erreur sont identifiées par une incohérence dans l'exécution en synchronisme ou la logique de vote de la première unité d'exécution (104), et/ou la défaillance et l'erreur donnent lieu à une interruption, interrompant de préférence le fonctionnement de la première unité d'exécution.

4. Système selon l'une quelconque des revendications précédentes,
dans lequel l'unité atomique (103) est en outre configurée pour exécuter l'étape suivante :
b2) envoyer un quatrième signal (115) à la première unité d'exécution (104), indiquant que le message et les états ont été sauvegardés avec succès dans le tampon, et
où le deuxième signal (120) de l'étape c) est envoyé par la première unité d'exécution (104) en réponse à la réception du quatrième signal (115).

5. Système selon la revendication 4,
dans lequel l'unité atomique (103) est en outre configurée pour exécuter l'étape suivante :
b3) vérifier si le message et les états sont correctement sauvegardés dans le tampon, et
envoyer le quatrième signal (115) en réponse à la vérification que le message et les états sont correctement sauvegardés dans le tampon.

6. Système selon l'une quelconque des revendications précédentes,
dans lequel l'unité atomique (103) est en outre configurée pour exécuter l'étape suivante :
f) recevoir un cinquième signal (130) en provenance de l'unité périphérique (102), indiquant que le message a été traité avec succès ; et
où l'étape e) est exécutée lorsque le message a été traité avec succès.

7. Système selon l'une quelconque des revendications précédentes,
dans lequel l'unité atomique (103) comprend de préférence des moyens de correction d'erreurs, tels qu'une logique de vote.

8. Système selon l'une quelconque des revendications précédentes, comprenant en outre :
une unité de décision (101) ; et
une deuxième unité d'exécution (105) ;
où l'unité de décision est configurée pour :
en réponse à la réception d'un sixième signal (140) indiquant une défaillance de la première unité d'exécution (104), déconnecter la première unité d'exécution (104) de l'unité atomique (103), et
connecter la deuxième unité d'exécution (105) à l'unité atomique (103) et/ou à l'unité de conservation d'états (106) .

9. Système selon la revendication 8,
dans lequel, après que la deuxième unité d'exécution s'est connectée à l'unité de conservation d'états, la deuxième unité d'exécution lit (155) les états de l'unité de conservation d'états.

10. Procédé mis en œuvre par ordinateur pour mettre à jour un ou plusieurs états relatifs à un message dans un véhicule, ledit procédé s'exécutant dans une unité atomique (103), le procédé comprenant les étapes suivantes :
a) recevoir un premier signal en provenance d'une première unité d'exécution (104) indiquant un message et un ou plusieurs états ;
b) sauvegarder le message et les états dans un tampon ;
c) en réponse à la sauvegarde correcte du message et des états, recevoir un deuxième signal en provenance de la première unité d'exécution (104), lançant l'envoi du message ;
d) envoyer le message à une unité périphérique ; et
e) envoyer un troisième signal à une unité de conservation d'états (106), pour mettre à jour les états dans un répertoire d'états.

11. Procédé selon la revendication 10, comprenant en outre l'étape suivante :
b2) envoyer un quatrième signal, indiquant que le message et les états ont été sauvegardés avec succès dans le tampon ;
où le deuxième signal de l'étape c) est envoyé en réponse à la réception du quatrième signal.

12. Procédé selon la revendication 10 ou la revendication 11, comprenant en outre l'étape suivante :
f) recevoir un cinquième signal en provenance de l'unité périphérique, indiquant que le message a été traité avec succès ;
où l'étape e) est exécutée en réponse au traitement réussi du message.

13. Support lisible par ordinateur comprenant une logique pour un réseau prédiffusé de portes, la logique, lorsqu'elle est mise en œuvre dans le réseau prédiffusé de portes, amenant le réseau prédiffusé de portes à exécuter les étapes de l'une quelconque des revendications 10 à 12 ; et/ou comprenant des instructions qui, lorsqu'elles sont exécutées par un ordinateur, amènent l'ordinateur à exécuter les étapes du procédé de l'une quelconque des revendications 10 à 12.
